Europäisches Patentamt

European Patent Office

Office européen des brevets

(11) Veröffentlichungsnummer: **0 268 808 B1**

# (12) EUROPÄISCHE PATENTSCHRIFT

(45) Veröffentlichungstag der Patentschrift: **09.12.92**

(21) Anmeldenummer: **87115065.2**

(22) Anmeldetag: **15.10.87**

(51) Int. Cl.⁵: **C01C 1/04**, B01J 8/02

(54) Verfahren zur Synthese von Ammoniak.

(30) Priorität: **28.11.86 DE 3640823**

(43) Veröffentlichungstag der Anmeldung:
**01.06.88 Patentblatt 88/22**

(45) Bekanntmachung des Hinweises auf die
Patenterteilung:
**09.12.92 Patentblatt 92/50**

(84) Benannte Vertragsstaaten:
**AT BE DE ES FR GB IT NL**

(56) Entgegenhaltungen:
**EP-A- 0 113 524**

**"Ullmanns Encyklopädie der Technischen Chemie", Band 7, Auflage 4, 1974, Seiten 478-490, Herausgeber E. BARTHOLOME, Verlag Chemie, Weinheim, DE; H. BAKEMEIER: "Ammoniak"**

(73) Patentinhaber: **Uhde GmbH**
**Friedrich-Uhde-Strasse 15**
**W-4600 Dortmund 1(DE)**

(72) Erfinder: **Herbort, Hans-Joachim, Dipl.-Ing.**
**Unnaer Strasse 65b**
**W-5758 Fröndenberg(DE)**
Erfinder: **Graeve, Heinz, Dipl.-Ing.**
**Bittermarkstrasse 33a**
**W-4600 Dortmund 50(DE)**

(74) Vertreter: **Patentanwälte Meinke und Dabringhaus Dipl.-Ing. J. Meinke Dipl.-Ing. W. Dabringhaus**
**Westenhellweg 67**
**W-4600 Dortmund 1(DE)**

## Beschreibung

Die Erfindung richtet sich auf ein Verfahren zur Synthese von Ammoniak, bei dem $NH_3$-haltiges Prozeßgas im Kreislauf über den oder die Ammoniakkonverter geführt und Ammoniak am Ende einer Kühlstrecke als Kondensat abgeschieden wird, wobei vom heißen Prozeßgas beaufschlagte Konverterteile durch kälteres Gas gekühlt werden.

Es ist bekannt, die Auslaßstutzen, über die das Heißgas einen Konverter verläßt, durch kältere Gase zu kühlen, wobei bei den bekannten Verfahrensweisen kälteres Prozeßgas zur Kühlung herangezogen wird, d.h. also ein Gas mit einem bereits vergleichsweise hohen Ammoniakgehalt. Damit wird zwar bereits eine gewisse Entlastung der Bauteile erreicht, allerdings müssen immer noch hochwertige Stähle eingesetzt werden. Die Möglichkeit einer derartigen Kühlung, bei der die gesamte Menge des einen Wärmetauscher verlassenden kälteren Prozeßgas in den Ammoniakkonverter eingespeißt wird, zeigt z.B. die gattungsbildende EP-A-0 113 524. Die dortige Lösung führt u.a. dazu, daß je nach Wärmetausch im Wärmetauscher auch das zum Kühlen herangezogene kältere Prozeßgas eine vergleichsweise hohe Temperatur aufweist, was zur Verwendung entsprechender Stähle bei den hier beaufschlagten Bauteilen führt. In der Literaturstelle "Ullmanns Encyklopädie der Technischen Chemie, Bd. 7, Aufl. 4, 1974, S. 478-490" ist ein Kreislaufverfahren, wie es bei üblichen $NH_3$-Synthesen eingesetzt wird, beschrieben, wobei die dort zur Kühlung herangezogenen Mantelgase ebenfalls wiederum $NH_3$-haltig sind.

Aufgabe der Erfindung ist die Schaffung einer Lösung, mit der insbesondere dünnwandigere Bauteile und/oder billigere Werkstoffe für die Konverter, insbesondere die Austrittstutzen herangezogen werden können.

Mit einer Verfahrensweise der eingangs bezeichneten Art wird diese Aufgabe gemäß der Erfindung daurch gelöst, daß $NH_3$-freies Frischgas als Kühlgas im Bereich des heißen Prozeßgases berührungsfrei zu letzterem geführt in den Prozeß eingespeist wird.

Mit der erfindungsgemäßen Verfahrensweise wird im Bereich heißer Prozeßgase vergleichsweise kaltes Frischgas als Kühlmittel herangezogen, das z.B. eine Temperatur von 30°C aufweisen kann. Damit wird die Auslegetemperatur, die üblicherweise um 400°C liegt um etwa 150°C gesenkt, mit den bereits oben angesprochenen Folgen, nämlich daß die Bauteile dünnwandiger ausgeführt werden und insbesondere auch billigere Werkstoffe herangezogen werden können. Da praktisch im Frischgas noch kein $NH_3$ enthalten ist, muß auch eine Nitrierung durch $NH_3$ nicht befürchtet werden, was auch dazu führt, daß eben preiswertere Werkstoffe eingesetzt werden können.

In Ausgestaltung sieht die Erfindung vor, daß das Kühlgas im Übergangsbereich zwischen einem Dampferzeuger und einem Ammoniakkonverter zugeführt und in einer Doppelwandführung als Kühlgas für den Konverter durch diesen hindurchgeführt und ggf. als Kühlgas für weitere Anlageteile eingesetzt wird.

An dieser Stelle sei nochmals darauf hingewiesen, daß es sich bei dem "Kühlgas" immer um praktisch $NH_3$-freies Frischgas handelt, die damit verbundenen Vorteile kommen auch den weiteren Verfahrensschritten zugute.

In spezieller Ausgestaltung sieht die Erfindung vor, daß das Kühlgas so geführt wird, daß es sich nicht mehr als um 70° vorzugsweise 20 - 40°C erwärmt.

Mit großem Vorteil läßt sich die Erfindung auch in Verfahren einsetzen mit wenigstens zwei getrennten Ammoniakkonvertern. Bei einer derartigen Gestaltung sieht die Erfindung vor, daß das Kühlgas von der Vorkammer eines Dampferzeugers über den ersten Konverter als kühlendes Mantelgas dem zweiten Konverter als kühlendes Mantelgas zugeführt wird und von dort ggf. in dem Systemkreislauf eingespeist wird.

Die erfindungsgemäßen Parameter des zugeführten Frisch-/Kühlgases bestehen darin, daß es einen $NH_3$-Gehalt von kleiner 0,2 Vol/% aufweist, eine Einlauftemperatur im Bereich von 20 - 150 °C hat und in einer Menge von 10 - 40 % der Kreislaufmenge zugeführt wird.

Eine Vorrichtung zur Durchführung des erfindungsgemäßen Verfahrens ist beispielsweise nachstehend anhand der Zeichnung näher erläutert, diese zeigt in

Fig. 1      eine Gesamtansicht einer erfindungsgemäßen Vorrichtung sowie in

Fig. 2      einen vergrößerten Schnitt etwa gemäß Linie II-II in Fig. 1.

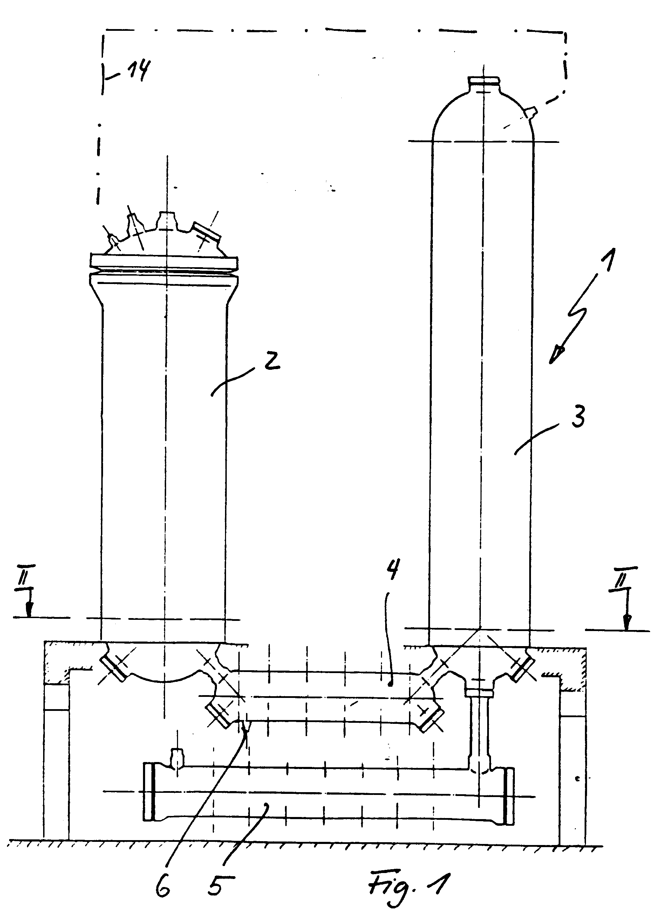

Die in Fig. 1 vereinfacht wiedergegebene Vorrichtung ist allgemein mit 1 bezeichnet. Sie wird gebildet von einem ersten Konverter 2, einem zweiten Konverter 3, jeweils in stehender Anordnung sowie einem horizontal dazwischen liegenden Dampferzeuger 4. Oberhalb des Dampferzeugers 4 kann eine Trommel angeordnet sein, was in den Figuren aller dings nicht zusätzlich wiedergegeben ist.

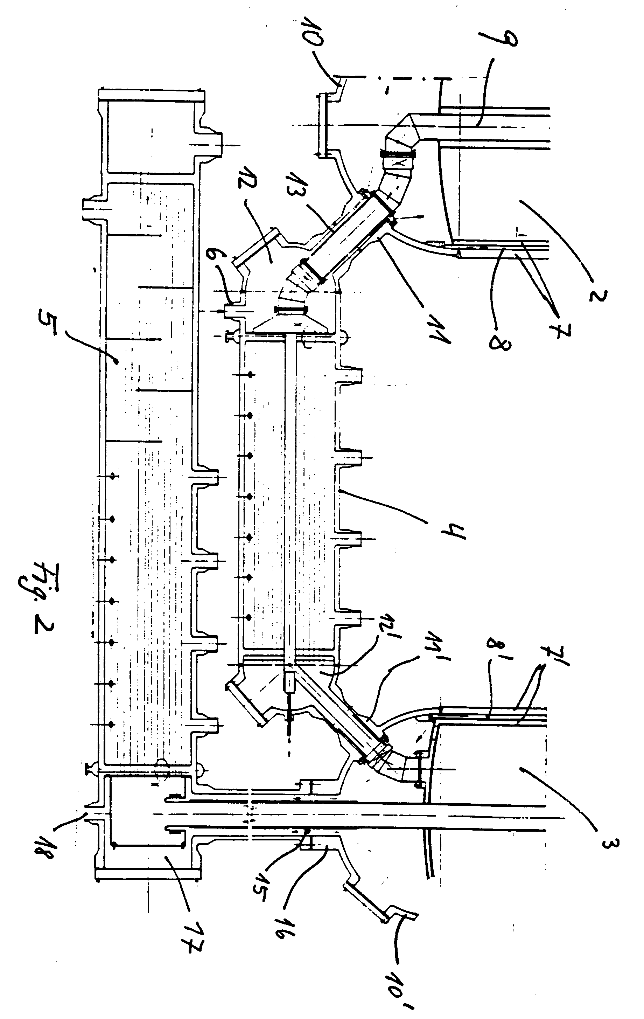

Bei der speziellen Gestaltung der Vorrichtung 1 gemäß Fig. 1 und 2 ist zusätzlich zum Dampferzeuger 4 ein weiterer Dampferzeuger oder Wärmetauscher 5 vorgesehen, der hier als getrenntes Bauteil in paralleler Anordnung zum ersten Dampferzeuger 4 angeordnet ist.

Wesentlich für die vorliegende Erfindung ist die Frischgaszufuhr als Kühlgas zum System. In Fig. 1 ist dies lediglich andeutungsweise wiedergegeben, der entsprechende Stutzen ist dort mit 6 bezeichnet. Nähere Einzelheiten ergeben sich aus Fig. 2: Betrachtet man einen der Konverter 2 bzw. 3, so sei zunächst darauf hingewiesen, daß die wesentlichen Wandelemente in zweischaliger Bauweise ausgeführt sind, und zwar die äußere mit 7 bezeichnete Doppelwand mit dazwischen liegendem Ringspalt 8 beim Konverter 2 bzw. 7' und 8' beim Konverter 3. Das heiße Prozeßgas verläßt den Konverter 2 durch eine zentrische Leitung 9, die seitlich aus dem mit 10 bezeichneten Boden des Konverters 2 zum Dampferzeuger 4 führt. Die Ausführung dieses heißen Rohres geschieht über einen Doppelrohrstutzen 11, der außen von kaltem über den Rohrstutzen 6 eingeführten Frischgas umströmt ist, wobei das Frischgas eine mit 12 bezeichnete Vorkammer des Wärmetauschers 4 beaufschlagt und über einen Ringspalt 13 den Konverter 2 zugeführt wird, uni dessen äußere Doppelwand 7 über den Ringspalt 8 zu kühlen.

Das Kühlgas verläßt nun den Konverter 2 und wird über einen in Fig. 1 strichpunktiert dargestellte Leitung 14 dem zweiten Konverter 3 zugeführt und durchströmt dessen Doppelwand 7' über den Ringspalt 8', um den Konverter 3 durch einen Ringspalt 15 in dessen Doppelrohrstutzen 16 zu verlassen. Im dargestellten Beispiel wird das Frischgas als Kühlgas noch durch eine weitere Vorkammer 17 eines weiteren Dampferzeugers 5 geleitet und verläßt das System zunächst durch den Rohrstutzen 18, um an anderer Stelle in den Prozeß eingespeist zu werden, worauf es hier aber nicht näher ankommt.

Erkennbar wird das heiße Prozeßgas zunächst quer durch den Dampferzeuger 4 geleitet und dann in den zweiten Konverter 3 über einen Doppelrohrstutzen 11', der wie der Doppelrohrstutzen 11 am ersten Konverter 2 außermittig angeordnet ist. Auch dieser Doppelrohrstutzen 11' kann kühlgasbeaufschlagt sein; dieses Kühlgas kann dann aus der zweiten Vorkammer 12' des Dampferzeugers 4 dem sonstigen Kühlgas wieder zugeführt werden, ohne daß dies in der Fig. näher dargestellt ist.

Natürlich ist das beschriebene Ausführungsbeispiel der Erfindung noch in vielfacher Hinsicht abzuändern, ohne den Grundgedanken zu verlassen. So ist es selbstverständlich auch möglich, die Dampferzeuger 4 und 5 in einem gemeinsamen Gehäuse anzuordnen mit den entsprechend gestalteten Vorkammern und den Zu- und Ableitungen der Heißgase u. dgl. mehr.

**Patentansprüche**

1. Verfahren zur Synthese von Ammoniak, bei dem NH$_3$-haltiges Prozeßgas im Kreislauf über den oder die Ammoniakkonverter geführt und Ammoniak am Ende einer Kühlstrecke als Kondensat abgeschieden wird, wobei vom heißen Prozeßgas beaufschlagte Konverterteile durch kälteres Gas gekühlt werden,
dadurch gekennzeichnet,
daß NH$_3$-freies Frischgas als Kühlgas im Bereich des heißen Prozeßgases berührungsfrei zu letzterem geführt in den Prozeß eingespeist wird.

2. Verfahren nach Anspruch 1,
dadurch gekennzeichnet,
daß das Kühlgas im Übergangsbereich zwischen einem Dampferzeuger und einem Ammoniakkonverter zugeführt und in einer Doppelwandführung als Kühlgas für den Konverter durch diesen hindurchgeführt und ggf. als Kühlgas für weitere Anlageteile eingesetzt wird.

3. Verfahren nach Anspruch 2,
dadurch gekennzeichnet,
daß das Kühlgas so geführt wird, daß es sich nicht mehr als um 70° vorzugsweise 20 - 40°C erwärmt.

4. Verfahren nach einem der vorangehenden Ansprüche,
mit wenigstens zwei getrennten Ammoniakkonvertern,
dadurch gekennzeichnet,
daß das Kühlgas von der Vorkammer eines Dampferzeugers über den ersten Konverter als kühlendes Mantelgas dem zweiten Konverter als kühlendes Mantelgas zugeführt wird und von dort ggf. in den Synthesekreislauf eingespeist wird.

5. Verfahren nach einem der vorangehenden Ansprüche,
dadurch gekennzeichnet,
daß ein Frisch-/Kühlgas zugeführt wird mit einem NH$_3$-Gehalt kleiner 0,2 Vol%, einer Einlauftemperatur im Bereich von 20 - 150°C und in einer Menge von 10 - 40 % der Kreislaufgasmenge.

**Claims**

1. A process for synthesising ammonia wherein NH$_3$-bearing process gas is circulated by way of the ammonia converter or converters and ammonia is separated off as a condensate at the end of a cooling section, wherein converter parts which are acted upon by the hot process gas are cooled by cooler gas, characterised in that NH$_3$-free fresh gas is fed into the process as a cooling gas in the region of the hot process gas, being guided in contact-free relationship with the latter.

2. A process according to claim 1 characterised in that the cooling gas is supplied in the transitional region between a vapour generator and an ammonia converter and is passed in a double-wall guide means as a cooling gas for the converter through the latter and is possibly used as a cooling gas for further parts of the installation.

3. A process according to claim 2 characterised in that the cooling gas is guided in such a way that it is heated not more than by 70°, preferably 20 - 40°C.

4. A process according to one of the preceding claims with at least two separate ammonia converters characterised in that the cooling gas from the preliminary chamber of a vapour generator is fed by way of the first converter as a cooling envelope gas to the second converter as a cooling envelope gas and from there is possibly fed into the synthesising circuit.

5. A process according to one of the preceding claims characterised in that a fresh/cooling gas is supplied having an $NH_3$-content of lower than 0.2% by volume, an intake temperature in the range of from 20 - 150°C and in an amount of from 10 - 40% of the amount of circulation gas.

**Revendications**

1. Procédé de synthèse d'ammoniac, selon lequel on recycle du gaz produit dans l'installation dans le ou les convertisseurs d'ammoniac et on sépare l'ammoniac sous forme de produit condensé à la fin d'un parcours de refroidissement, les parties du convertisseur en contact avec le gaz chaud produit dans l'installation étant refroidies par du gaz plus froid, caractérisé en ce qu'on introduit dans le procédé du gaz frais sans ammoniac conduit comme gaz réfrigérant dans la zone du gaz chaud produit dans l'installation sans contact avec ce dernier.

2. Procédé selon la revendication 1, caractérisé en ce que le gaz réfrigérant est amené dans la zone de passage entre un générateur de vapeur et un convertisseur d'ammoniac et est introduit, comme gaz réfrigérant pour le convertisseur, à travers ce dernier dans une conduite à double paroi, et est éventuellement utilisé comme gaz réfrigérant pour d'autres parties de l'installation.

3. Procédé selon la revendication 2, caractérisé en ce que le gaz réfrigérant est introduit de façon à ce qu'il se réchauffe au plus de 70°C, de préférence de 20-40°C.

4. Procédé selon l'une des revendications précédentes, avec au moins deux convertisseurs d'ammoniac séparés, caractérisé en ce qu'on conduit le gaz réfrigérant, à partir de la préchambre d'un générateur de vapeur, en passant par le premier convertisseur sous forme de gaz d'enveloppe réfrigérant, au deuxième convertisseur sous forme de gaz d'enveloppe réfrigérant, et en ce que, à partir de là, on l'introduit éventuellement dans le circuit de synthèse.

5. Procédé selon l'une des revendications précédentes, caractérisé en ce qu'on introduit un gaz frais réfrigérant ayant une teneur en $NH_3$ inférieure à 0,2 % en volume, une température d'introduction comprise entre 20 et 150°C et en une quantité de 10-40 % de la quantité de gaz du circuit.

Fig. 1

Fig. 2